# FASCICULE DE BREVET EUROPEEN

(11) **EP 3 719 227 B1**
(45) Date de publication et mention de la délivrance du brevet: **03.11.2021**
(21) Numéro de dépôt: 20168081.6
(22) Date de dépôt: 03.04.2020
(51) Int. Cl.: E04B 1/66, C08L 63/00, E02D 19/22, E02D 31/04

(54) **PROCÉDÉ D'ÉTANCHÉITE COMPRENANT UNE ÉTAPE DE PROJECTION SIMULTANÉE DE RÉSINE ÉPOXY ET DE FIBRES**
VERSIEGELUNGSVERFAHREN MIT EINEM SCHRITT DES GLEICHZEITIGEN SPRÜHENS VON EPOXYHARZ UND FASERN
SEALING METHOD COMPRISING A STEP OF SIMULTANEOUS SPRAYING OF EPOXY RESIN AND FIBERS

(30) Priorité: 05.04.2019 FR 1903668
(43) Date de publication de la demande: 07.10.2020
(73) Titulaire: Societe Parisienne de Produits et Materiaux, 75016 Paris (FR)
(72) Inventeur: LOUCHART, Jean-Noël, 91470 FORGE LES BAINS (FR)
(74) Mandataire: Casalonga

(56) Documents cités:
- FR-A1- 3 031 534
- US-A1- 2014 370 298

## Description

La présente invention porte sur un procédé d'étanchéité, résistant à la sous pression d'un fluide ou d'un gaz, comprenant une étape de projection simultanée d'une résine époxydique et de fibres choisies parmi les fibres de verre, de carbone, d'aramide, de basalte, de polyéthylène, de métal, de fibres naturelles ou de fibres hybrides.

Dans les nouvelles constructions, les espaces enterrés sont de plus en plus souvent aménagés en stations de métro, en parkings, en caves ou en habitations dotés de finitions et/ou équipements sensibles à l'humidité. Il est donc impératif de réaliser des ouvrages parfaitement étanches permettant de classer un local souterrain en local noble pour une activité humaine ou pour le stockage de marchandises ou de matériels sensibles à l'humidité, tels qu'une bibliothèque ou le stockage de matériel informatique.

Ces ouvrages doivent également être imperméables au radon ou à d'autres gaz présents dans le sol et pouvant s'infiltrer à travers les parois.

L'étanchéité de ces ouvrages enterrés est généralement réalisée par un revêtement d'étanchéité posé à l'extrados de l'ouvrage. Ce revêtement est indifférent à la fissuration de l'ouvrage lui-même, car non-solidaire de l'ouvrage. En d'autres termes, même si l'ouvrage est fissuré, la fonction d'étanchéité du revêtement est assurée.

Cependant, à long terme, le revêtement d'étanchéité précité devient moins résistant et se fissure, entrainant une porosité de la surface à étancher. En effet, ces revêtements d'étanchéité sont généralement conçus pour être efficaces une vingtaine d'années, alors que les ouvrages qu'ils recouvrent sont bâtis pour généralement durer une centaine d'années. L'eau ou les gaz peuvent alors s'infiltrer à travers la surface et rendre un tel ouvrage impropre à sa destination d'origine. Ces fissures étant difficilement accessibles, leurs réparations s'avèrent en général délicates et non satisfaisantes.

L'étanchéité des ouvrages enterrés peut également se faire par un revêtement d'imperméabilisation posé en adhérence à l'intrados de l'ouvrage. Cependant, ces revêtements sont souvent dépendants du comportement de l'ouvrage à traiter. En effet, lorsque l'ouvrage est fissuré, la fonction d'étanchéité de ces revêtements internes peut ne plus être assurée.

Par ailleurs, ces revêtements posés à l'intrados des ouvrages ont tendance à se décoller lorsque la contrepression devient trop élevée. La pose d'un ouvrage de confinement, complémentaire au revêtement, est alors nécessaire afin d'éviter le décollement du revêtement.

Afin de surmonter ces différents inconvénients, il a été proposé dans le brevet FR 3 029 223 de combiner une résine époxydique avec une armature de renfort. Ce revêtement intrados particulièrement résistant à la surpression présente néanmoins des difficultés d'application. En effet, la pose de l'armature de renfort nécessite un marouflage long et rigoureux pour que le tissu soit imprégné de résine.

Par ailleurs, lorsque les ouvrages à traiter présentent des surfaces complexes, la pose de l'armature de renfort peut s'avérer délicate et les nappes ou tissus la constituant peuvent ne pas être suffisamment imprégnés de résine, l'adhérence du revêtement s'en trouvant alors fragilisée.

Les fibres de l'armature de renfort sont en outre agencées selon un nombre d'orientations fixe et limité (généralement 2, 3 ou 4) ce qui peut entrainer des disparités de propriétés d'un point à l'autre du revêtement.

Ainsi, il existe un réel besoin de développer un procédé d'étanchéité qui permette de surmonter les inconvénients cités ci-dessus, et notamment d'obtenir un revêtement d'étanchéité présentant une résistance et une adhérence améliorées sur l'ensemble de la surface à traiter.

Le procédé doit en outre être facile et rapide à appliquer sur toute sorte d'ouvrage ou de surface souterrains, saturée ou non en eau. Il doit également être accessible et facilement réparable.

Le procédé doit notamment apporter une étanchéité à l'eau, au radon et autres gaz, tout en résistant aux fissures de l'ouvrage à traiter.

Il doit en outre réaliser une barrière à la pression osmotique et assurer le blocage des fissures de retrait. Il doit également assurer une fonction barrière vapeur résistante à la fissuration de la surface.

Il doit également permettre de réparer l'étanchéité d'un ouvrage préalablement étanché par un procédé externe et ainsi permettre de classer l'espace impropre en un espace noble à l'activité humaine ou au stockage de marchandise ou de matériel sensible à l'humidité.

Le document FR 3 031 534 A1 divulgue un procédé d'isolation phonique et d'étanchéité d'une surface comprenant successivement les étapes suivantes : a) une pose d'une ou plusieurs couches d'un isolant phonique sur la surface à traiter, b) une pose d'une ou plusieurs couches d'un matériau de renfort sur l'isolant phonique, et c) une pose d'un ou plusieurs systèmes d'étanchéification sur le matériau de renfort.

La présente invention a donc pour objet un procédé d'étanchéité d'une surface, résistant à la sous pression d'un fluide ou d'un gaz, mettant successivement en œuvre les étapes suivantes :
a) application d'une première couche d'une composition (A) sur ladite surface, puis
b) projection simultanée de composition (B) et de fibres choisies parmi les fibres de verre, de carbone, d'aramide, de basalte, de polyéthylène, de métal, de fibres naturelles ou de fibres hybrides, sur la surface obtenue à l'étape précédente, puis
c) application optionnelle d'au moins une couche supplémentaire de composition (C) sur les fibres projetées à l'étape précédente,
les compositions (A), (B) et (C) étant identiques ou différentes et comprenant chacune une ou plusieurs résines époxy, choisies parmi le diglycidyl éther de bisphénol A, le diglycidyl éther de bisphénol F et leurs mélanges, et un ou plusieurs agents de réticulation,
la quantité totale finale de composition (A+B+C), appliquée sur la surface, étant supérieure ou égale à 1000 g.m⁻².
L'étape b) peut être répétée deux ou trois fois pour augmenter la résistance du composite.

Le procédé selon la présente invention permet non seulement de rendre étanche un espace souterrain à l'eau, au radon, à l'air et autres gaz présents dans l'environnement, mais le revêtement d'étanchéité ainsi obtenu résiste également autant ou mieux à la contrepression et aux fissures de retrait que les revêtements des procédés de l'art antérieur. En effet, la projection simultanée des fibres et de la résine époxy permet d'obtenir un revêtement isotrope dans lequel les fibres sont complètement enrobées de résine améliorant d'autant l'ancrage de cette couche de renfort sur la ou les couches de composition (A) appliquées à l'étape a).

Par ailleurs, la couche de renfort, c'est-à-dire la couche de résine et de fibres formée à l'issue de l'étape b) du procédé, épouse parfaitement la forme de la surface à traiter permettant ainsi une bonne adhérence du revêtement d'étanchéité sur l'ensemble de la surface. Le procédé de l'invention permet également de traiter les points singuliers complexes et les surfaces accidentées. La résistance du revêtement d'étanchéité est ainsi renforcée sur l'ensemble de la surface.

Contrairement au procédé décrit dans le brevet FR 3 029 223, qui implique la pose d'une armature de renfort et un marouflage long, le procédé selon l'invention permet également l'utilisation de résines de plus faible durée de prise.

La projection des fibres permet en outre une mise en place complètement mécanisée, voire robotisée du procédé.

Enfin, le procédé selon la présente invention permet de classer un local souterrain en local noble pour une activité humaine ou pour le stockage de marchandises ou de matériels sensibles à l'humidité, tels qu'une bibliothèque, le stockage de matériel informatique, d'équipement de système de guidage automatique de train, commerces, gare souterraines, tunnel routier et ferroviaire.

D'autres objets, caractéristiques, aspects et avantages de l'invention apparaîtront encore plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ... ».

Par ailleurs, l'expression « au moins un » utilisée dans la présente description est équivalente à l'expression « un ou plusieurs ».

La composition (A) mise en œuvre dans le procédé selon la présente invention comprend une ou plusieurs résines époxy, choisies parmi le diglycidyl éther de bisphénol A, le diglycidyl éther de bisphénol F et leurs mélanges, et un ou plusieurs agents de réticulation.

Les résines époxy utilisables selon la présente invention sont les résines résultant de la réaction entre un ou plusieurs composés bisphénol, tel que le bisphénol A, le bisphénol E, le bisphénol F et leurs mélanges ; avec un ou plusieurs époxydes, tel que l'épichlorhydrine, le b-méthyl épichlorhydrine et leurs mélanges.

La ou les résines époxy sont choisies parmi le diglycidyl éther de bisphénol A (DGEBA), le diglycidyl éther de bisphénol F (DGEBF) et leurs mélanges.

Le ou les agents de réticulation utilisés dans la présente invention sont choisis parmi des agents usuels tels que les polyamines aliphatiques ou aromatiques, les anhydrides d'acide, les imidazoles, les polymercaptans, les polyamides, et leurs mélanges.

De préférence, le ou les agents de réticulation sont choisis parmi les polyamides modifiés, les polyamines aliphatiques et leurs mélanges.

L'agent de réticulation est présent dans la composition (A) en une quantité exprimée en nombre équivalent d'atomes d'hydrogène actifs au sein du groupe amino (ou autre groupe porteur d'hydrogène actif, selon la nature de l'agent de réticulation utilisé) allant de 0,8 à 1,2, et de préférence de 0,9 à 1,1 pour un équivalent en groupe époxy présent dans la résine époxy réticulable.

Le rapport pondéral entre la quantité totale de la ou des résines époxy et la quantité totale du ou des agents de réticulation, présents dans la composition (A), va préférentiellement de 0,1 à 10, et encore mieux de 1 à 2.

La composition (A) peut également comprendre un ou plusieurs additifs tels que des solvants réactifs ou non réactifs, des charges minérales, des agents rhéologiques ou leurs mélanges.

Selon un mode de réalisation particulier, la composition (B) appliquée à l'étape b) et/ou la composition (C) éventuellement appliquée à l'étape c) du procédé comprennent en outre un ou plusieurs composés ignifugeants non halogénés, et de préférence le phosphate d'ammonium.

La présence de ce ou ces composés ignifugeants dans la composition (B) ou (C) appliquée à l'étape b) ou c) du procédé permet d'assurer une résistance au feu correspondant au classement Bs1d0. Contrairement aux composés halogénés, les composés non halogénés ne dégagent pas de fumée toxique en cas d'incendie.

De préférence, la teneur du ou des composés ignifugeants, lorsqu'ils sont présents va de 25 à 50% en poids, et plus préférentiellement de 30 à 35% en poids, par rapport au poids total de la composition (B) ou (C) appliquée à l'étape b) ou c) du procédé.

Selon un mode de réalisation préféré de la présente invention, les compositions (A), (B) et (C) résultent du mélange d'au moins deux compositions :
- une composition (1) comprenant une ou plusieurs résines époxy, choisies parmi le diglycidyl éther de bisphénol A, le diglycidyl éther de bisphénol F et leurs mélanges, et
- une composition (2) comprenant un ou plusieurs agents de réticulation, tels que définis précédemment,
les compositions (A), (B) et (C) pouvant être identiques ou différentes.

En d'autres termes, les compositions (1) et (2) sont mélangées de manière homogène au moment de l'application de la composition (A), (B) ou (C) résultant de ce mélange.

Selon un premier mode de réalisation, dans les étapes a) et c) du procédé de l'invention, les compositions (A) et (C) sont appliquées manuellement au rouleau ou à l'aide d'une machine d'application, alors que la composition (B) est projetée, de préférence à l'aide d'un pistolet, dans l'étape b).

Selon un autre mode de réalisation particulièrement préféré, les compositions (A), (B) et (C) sont projetées, avantageusement à l'aide d'un pistolet, dans l'ensemble des étapes a), b) et c) de l'invention.

La température d'application manuelle de la composition (A) ou (C), dans les étapes a) et/ou c) du procédé, est avantageusement supérieure ou égale à 5°C, et de préférence cette température va de 10 à 40°C.

La température de projection des compositions (A), (B) ou (C), dans les étapes a) et/ou b) et/ou c) du procédé est comprise entre 15°C et 90°C. De préférence, cette température va de 35°C à 80°C. L'homme du métier adaptera la température pour respecter une iso-viscosité entre la résine et l'agent de réticulation.

Avantageusement, la quantité totale de composition (A), appliquée et/ou projetée sur la surface lors de l'étape a), va de 200 à 500 g.m⁻².

De même, la quantité totale de composition (B) sur la surface lors de l'étape b) va préférentiellement de 600 à 1200 g.m⁻².

Et la quantité totale de composition optionnelle (C), appliquée et/ou projetée sur la surface lors de l'étape c), va de préférence de 400 à 1000 g.m⁻².

De préférence, la quantité totale finale de composition (A+B+C), appliquée et/ou projetée sur la surface, va de 1000 à 3000 g.m⁻².

Par « quantité totale finale de composition (A+B+C) » au sens de la présente invention, on entend la quantité de composition (A+B+C) obtenue à l'issue du procédé, c'est-à-dire après réalisation des étapes a), b) et c).

En d'autres termes, la « quantité totale finale de composition (A+B+C) » correspond à la quantité de composition (A+B+C) présente sur la surface en fin du procédé selon la présente invention.

Lorsque la composition (A ou B ou C) est obtenue à partir du mélange des compositions (1) et (2), elle est appliquée sur la surface pendant une durée d'application de préférence inférieure ou égale à 60 minutes. Mieux encore, la durée d'application va de 20 à 60 minutes.

Les fibres projetées dans l'étape b) du procédé de l'invention sont choisies parmi les fibres de verre, de carbone, d'aramide, de basalte, de polyéthylène, de métal, de fibres naturelles ou de fibres hybrides, et de préférence choisies parmi les fibres de verre.

Avantageusement, la longueur des fibres projetées va de 10 mm à 40 mm. La longueur de la fibre permet de faire varier la résistance du composite à la pression de l'eau.

Les fibres sont découpées par un découpeur à partir de fils constitués de plusieurs filaments. De façon avantageuse, un à trois fils peuvent être projetés en même temps. Il est ainsi possible de projeter en même temps des fils de nature différente, tel que du verre et du basalte. Pour un fil, la vitesse de coupe est avantageusement comprise entre 1,5 m/s et 15 m/s, de préférence entre 3m/s et 9 m/s. La quantité de fibres projetées dépend du Tex des fils, exprimé en g/km, et du nombre de fils introduit dans le découpeur (1 à 3).

La quantité de fibres projetées par couche à l'étape b) va de préférence de 200 g/m² à 900 g/m². La quantité de fibres permet de faire varier la résistance du composite en fonction de la résistance du support

Avantageusement, le rapport pondéral entre la quantité de fibres et la quantité totale finale de composition (A+B+C) va de 0,1 à 0,75. De préférence, le rapport pondéral entre la quantité de fibres et la quantité totale finale de composition (A+B+C) va de 0,1 à 0,5.

De préférence, la pression de projection de résine va de 50 à 200 bars.

La pression permet de faire varier la distance entre la machine et le pistolet de projection (longueur du transport de la résine).

L'étape b) peut être répétée plusieurs fois, de préférence deux ou trois fois, pour augmenter la quantité de fibres et le rapport pondéral et ainsi, la résistance du composite.

Le procédé selon la présente invention peut éventuellement comprendre en outre au moins une étape de marouflage à l'issue de l'étape b). Les fibres, et plus particulièrement les fibres de verre, peuvent avoir tendance à se redresser. Une étape de marouflage entre les étapes b) et c) du procédé permet ainsi de lisser la surface avant d'appliquer la ou les couches supplémentaires de composition (C).

Le procédé selon la présente invention peut éventuellement comprendre en outre une ou plusieurs étapes de polymérisation.

En particulier, le procédé de l'invention peut comprendre une étape de polymérisation après l'étape a) et/ou après l'étape b) et/ou après l'étape c), telles que définies précédemment.

Lorsqu'elles sont présentes, les étapes de polymérisation ont une durée allant de 1 à 48 heures, et de préférence de 6 à 30 heures.

Par ailleurs, la température de polymérisation va de 5 à 40°C, et de préférence de 10 à 30°C.

Une durée de polymérisation supérieure ou égale à 24 heures permet d'obtenir la formation d'un film de résine époxyde réticulé homogène et résistant, améliorant ainsi le procédé de l'invention. En effet, le film de résine polymérisé ainsi obtenu peut se déformer sans se rompre et présente un allongement à la rupture de préférence allant de 0.5% à 10%, plus préférentiellement de 2 à 4.5%.

Le procédé selon la présente invention peut éventuellement comprendre en outre une première étape de préparation, c'est-à-dire de nettoyage, de la surface à traiter, préalablement avant la mise en œuvre de la composition (A).

En d'autres termes, selon un mode de réalisation préféré, la surface à traiter est préalablement nettoyée, avant l'étape a) d'application de la couche de composition (A), telle que décrite précédemment.

A titre d'exemples de nettoyages (ou de procédés de nettoyage) utilisables selon la présente invention, on peut notamment citer le sablage à sec ou humide, le sablage hydropneumatique, le grenaillage, le décapage hydraulique à 40 MPa, le rabotage et le ponçage diamanté.

Par « sablage », on entend au sens de la présente invention, un procédé permettant de projeter sur une surface bétonnée des granulats à l'aide d'air comprimé. De préférence, la taille des granulats va de 0,5 à 2 mm.

Par « grenaillage », on entend au sens de la présente invention, un procédé consistant à projeter par effet centrifuge des billes d'acier sur une surface bétonnée, les diamètres des billes d'acier utilisées vont avantageusement de 0,7 à 2 mm.

De préférence, le procédé de nettoyage est choisi parmi le sablage à sec, le grenaillage et le rabotage.

Cette étape de traitement de la surface à étancher permet un meilleur ancrage des couches de composition (A).

Le procédé selon la présente invention peut éventuellement comprendre en outre une étape préalable de ragréage à l'aide d'un mortier hydraulique, mise en place d'une couche fusible telle que décrite dans la demande de brevet française n°1872795 ou encore d'une résine.

Le procédé selon la présente invention est destiné à être appliqué sur tout type de surface interne d'un ouvrage souterrain. En d'autres termes, le procédé selon la présente invention est destiné à être appliqué sur l'intrados d'un ouvrage souterrain.

Par « ouvrage souterrain » au sens de la présente invention, on entend les tranchées couvertes, les passages souterrains sous plateforme routière, autoroutière et ferroviaire, les espaces souterrains enterrés, tels que les parkings, les gares ferroviaires et les stations de métro, les tunnels creusés et les tunnels forés, les infrastructures de bâtiment, ou tout ouvrage soumis à une pression interne.

Les surfaces destinées à être étanchées avec le procédé de l'invention peuvent être en béton armé ou non armé, en mortier, en béton précontraint ou en maçonnerie porteuse de petits éléments tels que des parpaings, des briques ou des pierres.

En particulier, le procédé de l'invention est destiné à être appliqué sur les voûtes et les dalles supérieures des tunnels, des parkings souterrains ou des tranchées couvertes, les piédroits et les voiles verticaux des tranchées couvertes, les radiers des tunnels ou des tranchées couvertes.

L'invention concerne également un procédé pour réaliser in situ un revêtement composite sur une surface mettant successivement en œuvre les étapes suivantes :
a) application d'une première couche d'une composition (A) sur ladite surface, puis
b) projection simultanée de composition (B) et de fibres choisies parmi les fibres de verre, de carbone, d'aramide, de basalte, de polyéthylène, de métal, de fibres naturelles ou de fibres hybrides, sur la surface obtenue à l'étape précédente, puis
c) application optionnelle d'au moins une couche supplémentaire de ladite composition (C) sur les fibres projetées à l'étape précédente,
les compositions (A), (B) et (C) étant identiques ou différentes et comprenant chacune une ou plusieurs résines époxy, choisies parmi le diglycidyl éther de bisphénol A, le diglycidyl éther de bisphénol F et leurs mélanges, et un ou plusieurs agents de réticulation,
la quantité totale finale de composition (A+B+C), appliquée sur la surface, étant supérieure ou égale à 1000 g.m⁻².
Les caractéristiques du procédé d'étanchéité décrites précédemment s'appliquent pour réaliser in situ un revêtement composite sur ladite surface.

Les exemples suivants servent à illustrer l'invention sans toutefois présenter un caractère limitatif.

### EXEMPLES

### Exemple 1

On réalise l'étanchéification d'une surface de béton selon le procédé de l'invention.

Une première couche de composition (A) comprenant du diglycidyl éther de bisphénol A est appliquée par projection à chaud sur la surface du béton à raison de 350g/m².

De façon simultanée, c'est-à-dire sans attendre la polymérisation, une deuxième couche de composition (B) comprenant du diglycidyl éther de bisphénol A et de fibres de verre est appliquée par projection à chaud, à raison de 800g/m² pour la composition (B) et de 350g/m² pour les fibres de verre.

La surface est ensuite marouflée afin d'aplanir les fibres. Immédiatement après, c'est-à-dire sans attendre la polymérisation, une troisième couche de composition (C) comprenant du diglycidyl éther de bisphénol A est appliquée par projection à chaud à raison de 600g/m². Lors des étapes de projection à chaud des compositions (A), (B) et (C), la résine époxy et l'agent de réticulation sont mélangés à iso-viscosité, c'est-à-dire que la température de la résine est de 70°C et la température de l'agent de réticulation est de 50°C.

### Exemple 2

On réalise l'étanchéification d'une surface de béton selon le procédé de l'invention.

Une couche de composition (A) comprenant du diglycidyl éther de bisphénol A est appliquée manuellement à froid ou par projection à chaud sur la surface du béton à raison de 350g/m².

Un temps de polymérisation de 24h est ensuite observé.

Puis, une deuxième couche de composition (A) comprenant du diglycidyl éther de bisphénol A est appliquée par projection à chaud sur la surface du béton à raison de 350g/m².

De façon simultanée, c'est-à-dire sans attendre la polymérisation, une troisième couche de composition (B) comprenant du diglycidyl éther de bisphénol A et de fibres de verre est appliquée par projection à chaud, à raison de 800g/m² pour la composition (B) et de 350g/m² pour les fibres de verre.

La surface est ensuite marouflée afin d'aplanir les fibres. Immédiatement après, c'est-à-dire sans attendre la polymérisation, une quatrième couche de composition (C) comprenant du diglycidyl éther de bisphénol A est appliquée par projection à chaud à raison de 600g/m². Lors des étapes de projection à chaud des compositions (A), (B) et (C), la résine époxy et l'agent de réticulation sont mélangés à iso-viscosité, c'est-à-dire que la température de la résine est de 70°C et la température de l'agent de réticulation est de 50°C.

## Revendications

1. Procédé d'étanchéité d'une surface, résistant à la sous pression d'un fluide ou d'un gaz, mettant successivement en œuvre les étapes suivantes :
a) application d'une première couche d'une composition (A) sur ladite surface, puis
b) projection simultanée de composition (B) et de fibres choisies parmi les fibres de verre, de carbone, d'aramide, de basalte, de polyéthylène, de métal, de fibres naturelles ou de fibres hybrides, sur la surface obtenue à l'étape précédente, puis
c) application optionnelle d'au moins une couche supplémentaire de composition (C) sur les fibres projetées à l'étape précédente,
les compositions (A), (B) et (C) étant identiques ou différentes et comprenant chacune une ou plusieurs résines époxy, choisies parmi le diglycidyl éther de bisphénol A, le diglycidyl éther de bisphénol F et leurs mélanges, et un ou plusieurs agents de réticulation,
la quantité totale finale de composition (A+B+C), appliquée sur la surface, étant supérieure ou égale à 1000 g.m⁻².

2. Procédé selon la revendication précédente, **caractérisé en ce que** le rapport pondéral entre la quantité totale de la ou des résines époxy et la quantité totale du ou des agents de réticulation, présents dans la composition (A), va de 0,1 à 10, et de préférence de 1 à 2.

3. Procédé selon revendication 1 ou 2, **caractérisé en ce que** la composition (A) ou (C) appliquée aux étapes a) et c) est projetée.

4. Procédé selon la revendication 3, **caractérisé en ce que** la température de projection de la composition (A), (B) ou (C) va de 15°C à 90°C, de préférence de 35°C à 80°C.

5. Procédé selon l'une quelconque des revendications précédentes, **caractérisé en ce que** la quantité de fibres projetées va de 200 g à 900 g/m² par couche.

6. Procédé selon l'une quelconque des revendications précédentes, **caractérisé en ce que** le rapport pondéral entre la quantité de fibres et la quantité totale finale de composition (A+B+C) va de 0,1 à 0,5.

7. Procédé selon l'une quelconque des revendications précédentes, **caractérisé en ce que** la quantité totale finale de composition (A+B+C), appliquée sur la surface, va de 1000 à 3000 g.m⁻².

8. Procédé selon l'une quelconque des revendications précédentes, **caractérisé en ce qu'**il comprend au moins une étape de marouflage réalisée entre l'étape b) et l'étape c).

9. Procédé selon l'une quelconque des revendications précédentes, **caractérisé en ce qu'**il comprend au moins une étape de polymérisation réalisée après l'étape a) et/ou après l'étape b) et/ou après l'étape c).

10. Procédé selon la revendication précédente, **caractérisé en ce que** la ou les étapes de polymérisation ont une durée allant de 1 à 48 heures, et de préférence de 6 à 30 heures.

11. Procédé selon l'une quelconque des revendications précédentes, **caractérisé en ce qu'**il comprend en outre une première étape de traitement de la surface.

12. Procédé selon l'une quelconque des revendications précédentes, **caractérisé en ce qu'**il est destiné à être appliqué sur l'intrados d'un ouvrage souterrain.

13. Procédé selon l'une quelconque des revendications précédentes, **caractérisé en ce qu'**il est destiné à être appliqué sur une ou plusieurs surfaces telles que les voûtes et les dalles supérieures des tunnels ou des tranchées couvertes, les piédroits et les voiles verticaux des tranchées couvertes, les radiers des tunnels ou des tranchées couvertes.

14. Procédé pour réaliser in situ un revêtement composite sur une surface mettant successivement en œuvre les étapes suivantes :
a) application d'une première couche d'une composition (A) sur ladite surface, puis
b) projection simultanée de composition (B) et de fibres choisies parmi les fibres de verre, de carbone, d'aramide, de basalte, de polyéthylène, de métal, de fibres naturelles ou de fibres hybrides, sur la surface obtenue à l'étape précédente, puis
c) application optionnelle d'au moins une couche supplémentaire de composition (C) sur les fibres projetées à l'étape précédente,
les compositions (A), (B) et (C) étant identiques ou différentes et comprenant chacune une ou plusieurs résines époxy, choisies parmi le diglycidyl éther de bisphénol A, le diglycidyl éther de bisphénol F et leurs mélanges, et un ou plusieurs agents de réticulation,
la quantité totale finale de composition (A+B+C), appliquée sur la surface, étant supérieure ou égale à 1000 g.m⁻².

## Patentansprüche

1. Verfahren zum Abdichten einer Oberfläche, resistent gegen den Unterdruck einer Flüssigkeit oder eines Gases, schrittweise die folgenden Schritte umsetzend:
a) Auftragen einer ersten Schicht einer Verbindung (A) auf die Oberfläche, dann
b) simultane Projektion von einer Verbindung (B) und von Fasern, ausgewählt aus Glas-, Kohle-, Aramid-, Basalt, Polyethylen-, Metallfasern, natürlichen Fasern und Hybridfasern, auf die im vorhergehenden Schritt gewonnene Oberfläche, dann
c) optionale Anwendung von wenigstens einer zusätzlichen Schicht einer Verbindung (C) auf die im vorhergehenden Schritt projizierten Fasern,
wobei die Verbindungen (A), (B) und (C) identisch oder unterschiedlich sind und jeweils ein oder mehrere Epoxidharze umfassen, ausgewählt aus Bisphenol-A-diglycidylether, Bisphenol-F-diglycidylether und ihren Gemischen, und ein oder mehrere Vernetzungsmitteln,
wobei die gesamte Endmenge der Verbindung (A+B+C), aufgetragen auf die Oberfläche, mehr als oder gleich 1000 g.m⁻² beträgt.

2. Verfahren nach dem vorhergehenden Anspruch, **dadurch gekennzeichnet, dass** das Gewichtsverhältnis zwischen der Gesamtmenge des oder der Epoxidharze und der Gesamtmenge des oder der Vernetzungsmittel, vorhanden in der Verbindung (A), von 0,1 bis 10 reicht und bevorzugt von 1 bis 2.

3. Verfahren nach Anspruch 1 oder 2, **dadurch gekennzeichnet, dass** die Verbindung (A) oder (C), aufgetragen in den Schritten a) und c), projiziert wird.

4. Verfahren nach Anspruch 3, **dadurch gekennzeichnet, dass** die Temperatur der Projektion der Verbindung (A), (B) oder (C) von 15 °C bis 90 °C reicht, bevorzugt von 35 °C bis 80 °C.

5. Verfahren nach einem der vorhergehenden Ansprüche, **dadurch gekennzeichnet, dass** die Menge der projizierten Fasern von 200 g bis 900 g/m² pro Schicht reicht.

6. Verfahren nach einem der vorhergehenden Ansprüche, **dadurch gekennzeichnet, dass** das Gewichtsverhältnis zwischen der Menge der Fasern und der gesamten Endmenge der Verbindung (A+B+C) 0,1 bis 0,5 beträgt.

7. Verfahren nach einem der vorhergehenden Ansprüche, **dadurch gekennzeichnet, dass** die gesamte Endmenge der Verbindung (A+B+C), aufgetragen auf die Oberfläche, von 1000 bis 3000 g.m⁻² reicht.

8. Verfahren nach einem der vorhergehenden Ansprüche, **dadurch gekennzeichnet, dass** es wenigstens einen Hinterklebungsschritt umfasst, durchgeführt zwischen dem Schritt b) und dem Schritt c).

9. Verfahren nach einem der vorhergehenden Ansprüche, **dadurch gekennzeichnet, dass** es wenigstens einen Polymerisiserungsschritt umfasst, durchgeführt nach dem Schritt a) und/oder nach dem Schritt b) und/oder nach dem Schritt c).

10. Verfahren nach einem der vorhergehenden Ansprüche, **dadurch gekennzeichnet, dass** der oder die Polymerierungsschritte eine Dauer haben reichend von 1 bis 48 Stunden, bevorzugt zwischen 6 und 30 Stunden.

11. Verfahren nach einem der vorhergehenden Ansprüche, **dadurch gekennzeichnet, dass** es weiter einen ersten Schritt der Oberflächenbehandlung umfasst.

12. Verfahren nach einem der vorhergehenden Ansprüche, **dadurch gekennzeichnet, dass** es dafür bestimmt ist, für die Leibung eines unterirdischen Bauwerks angewandt zu werden.

13. Verfahren nach einem der vorhergehenden Ansprüche, **dadurch gekennzeichnet, dass** es dafür bestimmt ist, auf einer oder mehreren Oberflächen angewendet zu werden wie den Gewölben und den oberen Bodenplatten von Tunneln oder von überdeckten Gräben, den Hocheingängen und den vertikalen Flügeln von überdeckten Gräben, den Sohlen von Tunneln oder von überdeckten Gräben.

14. Verfahren zum Durchführen in situ einer Kompositverkleidung auf einer Oberfläche, sukzessive die folgenden Schritte durchführend:
a) Auftragen einer ersten Schicht einer Verbindung (A) auf der Oberfläche, dann
b) simultane Projektion einer Verbindung (B) und von Fasern ausgewählt aus Glas, Kohle- , Aramid-, Basalt, Polyethylen-, Metallfasern, natürlichen Fasern und Hybridfasern auf der im vorhergehenden Schritt gewonnenen Oberfläche, dann
c) optionales Auftragen von wenigstens einer zusätzlichen Schicht einer Verbindung (C) auf die im vorhergehenden Schritt projizierten Fasern,
wobei die Verbindungen (A), (B) und (C) identisch oder unterschiedlich sind und ein oder mehrere Epoxidharze umfassen, ausgewählt aus Bisphenol-A-diglycidyletr,
Bisphenol-F-diglycidylether und ihren Gemischen und einem oder mehreren Vernetzungsmitteln,
wobei die Gesamtmenge der Verbindung (A+B+C), aufgetragen auf die Oberfläche, mehr als oder gleich 1000 g.m⁻² beträgt.

## Claims

1. A method for sealing a surface, resisting the pressure of a fluid or a gas, successively implementing the following steps:
a) application of a first layer of a composition (A) on said surface, then
b) simultaneous projection of composition (B) and fibres selected from the glass, carbon, aramid, basalt, polyethylene, metal fibres, natural fibres or hybrid fibres, on the surface obtained in the previous step, then
c) optional application of at least one additional layer of composition (C) on the fibres projected in the previous step,
the compositions (A), (B) and (C) being identical or different and each comprising one or more epoxy resins, selected from the bisphenol A diglycidyl ether, the bisphenol F diglycidyl ether and the mixtures thereof, and one or more crosslinking agents,
the final total amount of composition (A + B + C), applied on the surface, being greater than or equal to 1000 g.m⁻².

2. The method according to the preceding claim, **characterised in that** the weight ratio between the total amount of the epoxy resins(s) and the total amount of the crosslinking agent(s), present in the composition (A), ranges from 0.1 to 10, and preferably from 1 to 2.

3. The method according to claim 1 or 2, **characterised in that** the composition (A) or (C) applied to steps a) and c) is projected.

4. The method according to claim 3, **characterised in that** the projection temperature of the composition (A), (B) or (C) ranges from 15°C to 90°C, preferably from 35°C to 80°C.

5. The method according to any one of the preceding claims, **characterised in that** the amount of projected fibres ranges from 200 g to 900 g/m² per layer.

6. The method according to any one of the preceding claims, **characterised in that** the weight ratio between the amount of fibres and the final total amount of composition (A + B + C) ranges from 0.1 to 0.5.

7. The method according to any one of the preceding claims, **characterised in that** the final total amount of composition (A + B + C), applied on the surface, ranges from 1000 to 3000 g.m⁻².

8. The method according to any one of the preceding claims, **characterised in that** it comprises at least one rollerpressing step carried out between step b) and step c).

9. The method according to any one of the preceding claims, **characterised in that** it comprises at least one polymerisation step carried out after step a) and/or after step b) and/or after step c).

10. The method according to the preceding claims, **characterised in that** the polymerisation step(s) have a duration ranging from 1 to 48 hours, and preferably from 6 to 30 hours.

11. The method according to any one of the preceding claims, **characterised in that** it further comprises a first step of treating the surface.

12. The method according to any one of the preceding claims, **characterised in that** it is intended to be applied on the intrados of an underground structure.

13. The method according to any one of the preceding claims, **characterised in that** it is intended to be applied on one or more surfaces such as the vaults and the upper slabs of the tunnels or the covered trenches, the side walls and the vertical webs of the covered trenches, the sills of the tunnels or the covered trenches.

14. The method for making in situ a composite coating on a surface successively implementing the following steps:
a) application of a first layer of a composition (A) on said surface, then
b) simultaneous projection of composition (B) and fibres selected from the glass, carbon, aramid, basalt, polyethylene, metal fibres, natural fibres or hybrid fibres, on the surface obtained in the previous step, then
c) optional application of at least one additional layer of composition (C) on the fibres projected in the previous step,
the compositions (A), (B) and (C) being identical or different and each comprising one or more epoxy resins, selected from the bisphenol A diglycidyl ether, the bisphenol F diglycidyl ether and the mixtures thereof, and one or more crosslinking agents,
the final total amount of composition (A + B + C), applied on the surface, being greater than or equal to 1000 g.m⁻².
